# EUROPEAN PATENT SPECIFICATION

(11) **EP 1 243 943 B1**
(45) Date of publication and mention of the grant of the patent: **17.03.2010**
(21) Application number: 01201054.2
(22) Date of filing: 21.03.2001
(51) Int. Cl.: G01S 15/04, E05F 15/20

(54) **Ultrasonic method and apparatus for automatically controlling moving doors**
Verfahren und Gerät zur automatischen Steuerung von beweglichen Türen mittels Ultraschall
Procédé et dispostif à ultrason pour la commande automatique des portes muables

(43) Date of publication of application: 25.09.2002
(73) Proprietor: ASSA ABLOY IP AB, 107 23 Stockholm (SE)
(72) Inventor: Ariav, Arie, 79304 Doar Na Hof Ashkelon (IL)
(74) Representative: Johansson Webjörn, Ingmari

(56) References cited:
- EP-A- 0 803 632
- DE-U- 29 701 462
- US-A- 4 967 083

## Description

### FIELD AND BACKGROUND OF THE INVENTION

The present invention relates to an ultrasonic method and apparatus for automatically controlling the opening and closing of sliding doors movable over a floor.

Automatic door control systems are gaining wide-spread use in order to control traffic into or out of enclosed spaces which are heated or cooled by air-conditioning systems. Such door control systems not only must detect and respond to objects moving towards the closed doors, but must also provide protection against injury by a closing or opening door, and further, should minimize the time the door is in the open condition in order to minimize wastage of the energy used for air-conditioning the enclosed space.

The prior art can be represented by EP 0 803 632 that discloses a door sensor with a self-diagnosing function.

### OBJECTS AND BRIEF SUMMARY OF THE INVENTION

An object of the present invention is to provide an ultrasonic method and apparatus for automatically controlling the opening and closing of sliding doors having advantages in the above respects.

According to one aspect of the present invention, there is provided a method of automatically controlling the opening and closing of a sliding door movable over a floor, and a drive for driving the door to its open and closed positions, a predetermined approach area being located in front of said door, the method being characterised by ultrasonically monitoring the predetermined approach area by:
(i) dividing the predetermined approach area into a plurality of strips;
(ii) dividing each strip into a plurality of cells, to thereby define a matrix of cells;
(iii) detecting the presence of an object in any of said matrix of cells;
(iv) detecting the center of gravity of all the cells in which an object is detected;
(v) monitoring the movement of said detected center of gravity with respect to the door; and
(vi) controlling said drive to open said door when said detected center of gravity is determined to be moving towards, and at a predetermined speed towards or within a predetermined distance from, said sliding door when in its closed position.

According to further features in the described preferred embodiment, monitoring the predetermined approach area is performed by a first group of ultrasonic transceivers spaced along the door and directed at an acute angle towards the floor; whereas monitoring the protect area is performed by a second group of ultrasonic transceivers spaced along the door and directed substantially perpendicularly towards the floor.

As will be described more particularly below, such a method may be implemented by an expansible modular construction by providing an ultrasonic head for each strip of the approach area and by processing the output of each head in a separate channel. Also, the novel method avoids the need to discriminate between different sensors (e.g., by frequency or time discrimination), and also the need to distinguish between many objects in the approach area. Such a method also distinguishes cross-traffic (traffic moving substantially parallel to the doors) which should not open the doors, from approaching traffic which should open the doors.

According to a further aspect of the invention, there is provided an apparatus for automatically controlling the opening and closing of a sliding door having at least one sliding door panel movable over a floor, said door having a predetermined approach area located in front of the door, a first predetermined lateral area extending laterally in the plane in which the door can slide outwards from a first end of the door in the opening direction of the door when in its closed position, and a second predetermined lateral area extending laterally in the plane in which the door can slide inwards from a second end of the door in the closing direction of the door when in its opened position; comprising:
a drive for driving said sliding door to its open and closed positions;
wherein said apparatus is characterised by
an ultrasonic monitoring system for ultrasonically monitoring the predetermined approach area by:
   (i) dividing the predetermined approach area into a plurality of strips;
   (ii) dividing each strip into a plurality of cells, to thereby define a matrix of cells;
   (iii) detecting the presence of an object in any of said matrix of cells;
   (iv) detecting the center of gravity of all the cells in which an object is detected;
   (v) monitoring the movement of said detected center of gravity with respect to the door; and
   (vi) controlling said drive to open said door when said detected center of gravity is determined to be moving towards, and at a predetermined speed towards or within a predetermined distance from, said sliding door when in its closed position.

Further features and advantages of the invention will be apparent from the description below.

### BRIEF DESCRIPTION OF THE DRAWINGS

The invention is herein described, by way of example only, with reference to the accompanying drawings, wherein:
Fig. 1 is a typicai door area diagram which will be heipfui in explaining the present invention;
Fig. 2 is a top plan view diagrammatically illustrating one implementation of the present invention utilizing four sensor heads on each side of the door to be controlled;
Fig. 3 is a bottom plan view of one of the eight sensor heads in the implementation of Fig. 2;
Fig. 4 is a side elevational view of the sensor head of Fig. 3;
Fig. 5 is a side view diagrammatically illustrating the angular deployment of the sensor heads in the implementation of Fig. 2;
Fig. 6 is a block diagram illustrating one form of overall apparatus constructed in accordance with the present invention;
Fig. 7 is a flow chart illustrating the operation of each of the two sensor head processors connected to the four sensor heads on each side of the door; and
Figs. 8a and 8b, taken together, constitute a flow chart illustrating the manner in which the doors are controlled by the main processor.

### DESCRIPTION OF A PREFERRED EMBODIMENT

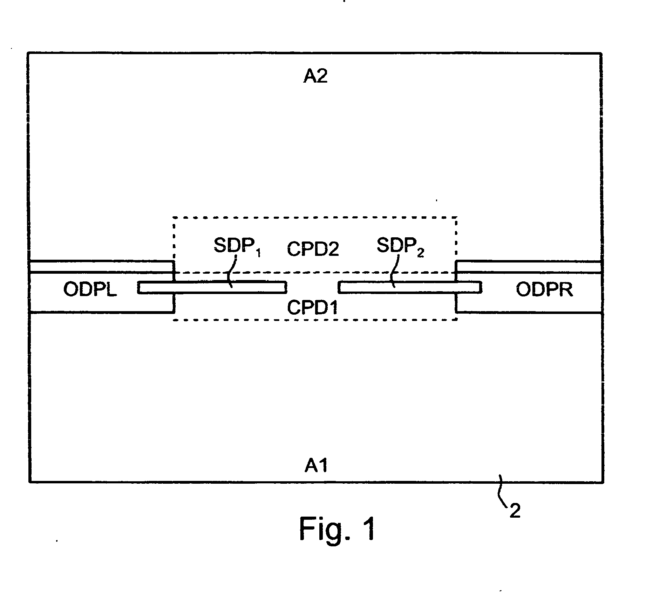

Fig. 1 diagrammatically illustrates, in top plan view, a sliding door in the form of a pair of sliding door panels SDP₁, SDP₂ movable to their closed positions and to their open positions over a floor 2 to control the flow of traffic through a passageway defined by the door panels. The area on each side of the two sliding door panels SDP₁, SDP₂, is divided into the following: a predetermined approach area A1, A2 located in front of the sliding door panels on each side thereof; a

first predetermined lateral area, sometimes referred to below as an opening-door protect area ODPL (left) ODPR (right), laterally outwardly of the outer ends of the sliding door panels when in their closed positions; and a second predetermined lateral area, sometimes referred to below as a closing-door protect area CDP1, CDP2, between the inner ends of the sliding door panels when in their open positions.

As will be described more particularly below, the approach areas A1, A2 are continuously monitored for the entry of an object therein, and for the movement of the object towards the closed sliding door panels, to open them at the proper time. The opening-door protect areas ODPL, ODPR are continuously monitored such that the present of an object in those areas when the doors are to open will produce a slow opening of the doors; and the closing-door protect areas CDP1, CDP2 are also continuously monitored such that the present of an object in those areas when the doors are to close will interrupt the closing of the doors and will reopen them.

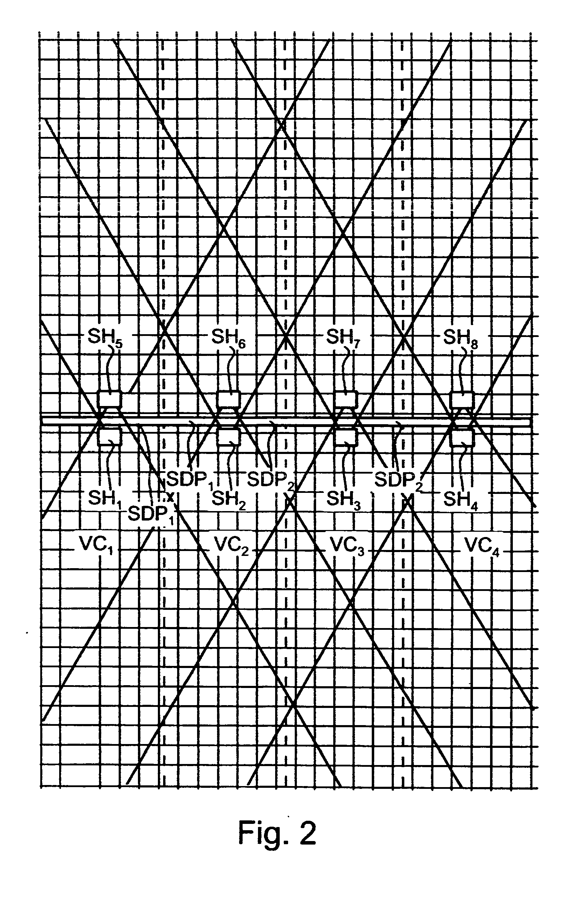

The monitoring of the areas illustrated in Fig. 1 is effected by apparatus of a modular construction which, in the illustrated example, includes eight sensor heads SH₁- SH₈ carried on opposite sides of the frame spaced along the sliding door panels SDP₁, SDP₂. Thus, as shown in Fig. 2, four sensor heads SH₁ - SH₄ are located over the sliding door panels to face one side of the passageway defined by the door panels, and the remaining sensor heads SH₅ - SH₈ are spaced over the sliding door panels facing the opposite side of the passageway. The two end sensor heads SH₁, SH₅ are located centrally of the sliding door panel SDP₁ in its open position; sensor heads SH₂, SH₆ are located centrally of the sliding door panel SDP₁ in its closed position; sensor heads SH₃, SH₇ are located centrally of the sliding door panel SDP₂ in its closed position; and sensor heads SH₄, SH₈ are located centrally of sliding door panel SDP₂ in its open position.

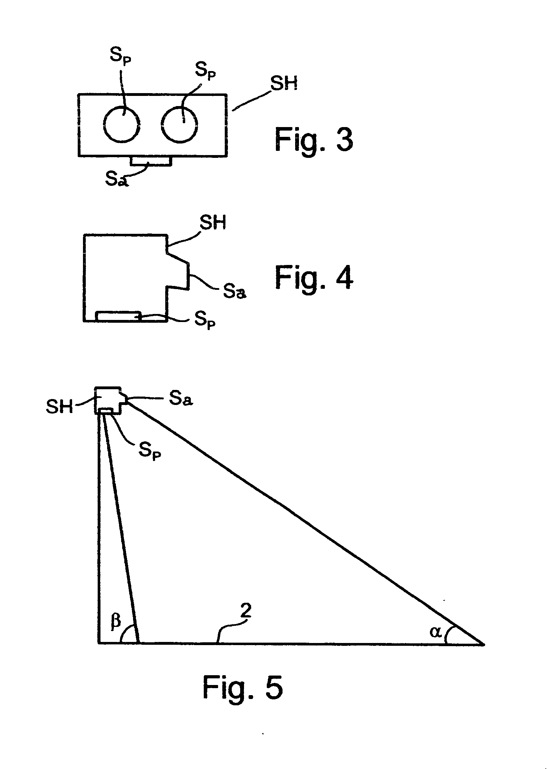

As will be described more particularly below with respect to Figs. 3 and 4, each sensor head SH₁- SH₈ includes three sensors, each in the form of an ultrasonic transceiver. One sensor in each head is used for monitoring the approach area A1, A2 (Fig. 1); and the other two sensors in each head are used for monitoring the opening-door protect area ODPL, ODPR and the closing-door protect areas CDP1, CDP2.

As further shown in Fig. 2, each of the approach areas A1, A2 on the opposite sides of the sliding door panels SDP₁, SDP₂ is divided into a plurality of strips, one for each head, with each strip divided into a plurality of cells to define a matrix of cells. In this case, the cells are arranged in four vertical strips or columns VC₁ - VC₄, each defined by one head located at either the open position or the closed position of one of the two sliding door panels SDP₁, SDP₂. Each matrix further includes a plurality of horizontal rows; in this case, there are 20 horizontal rows. As one example, the approach area A1, A2 on each side of the sliding door panels may be 340 cm, in which case the height of each row would be 17 cm.

Figs. 3 and 4 illustrate the construction of each of the sensor heads SH₁ - SH₈; and Fig. 5 diagrammatically illustrates the angular deployment of the sensor heads with respect to the floor 2 in the area being monitored.

Thus, as shown in Figs. 3 and 4, each sensor head, therein designated SH, includes one approach sensor Sa and two protect sensors Sp. As shown in Fig. 5, the approach sensor Sa is a wide-angle ultrasonic transceiver outputting a wide conical beam (e.g., 60°) and is oriented with respect to the floor such that its outer ray is at an acute angle α (e.g., about 30°) with respect to the floor 2 to thereby cover the complete approach area (A1, A2, Fig. 1). Each protect sensor Sp is a similar ultrasonic transceiver outputting a conical beam but substantially perpendicularly to the floor 2 adjacent to the sliding door panels SDP₁, SDP₂. In the example illustrated in Fig. 5, the protect sensors Sp output a 60° ultrasonic beam, with its central axis perpendicular to the floor, but only one-half the beam is utilized on each side of the sliding door panels so that the angle β of its outer ray with respect to the floor 2 is approximately 60°.

It will be appreciated that the protect sensors Sₚ in the end sensor heads (SH₁, SH₅, SH₄, SH₈) monitor the opening-door protect areas ODPL, ODPR (Fig. 1); and that the protect sensors Sₚ in the remaining middle sensor heads monitor the closing-door protect areas CDP₁, CDP₂. On the other hand, all the approach sensors Sa on one side of the sliding door panels monitor the complete approach area, A1 or A2, on the respective side.

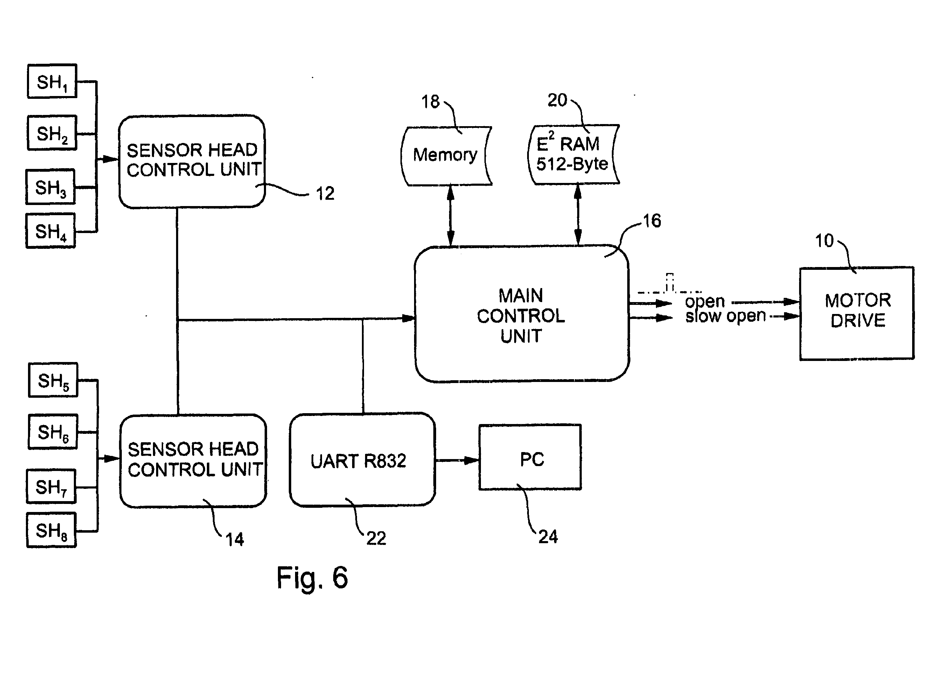

Fig. 6 illustrates the overall control system for controlling the motor drive 10 in response to the objects detected by the sensor heads SH₁- SH₄ on one side of the sliding door panels, and the sensor heads SH₅ - SH₈ on the opposite side of the sliding door panels. The control system illustrated in Fig. 6 includes a sensor head control unit 12 connected to the first group of sensor heads SH₁- SH₄, and a second sensor head central unit 14 connected to the second group of sensor heads SH₅ - SH₈. The two sensor head control units 12, 14, feed a main control unit 16 which controls the motor drive 10 for driving the sliding door panels SDP₁, SDP₂ to their open and closed positions.

The control system illustrated in Fig. 6 further includes an external memory 18 for storing the data being processed in the main control unit 16; a 512-byte E² RAM 20 for storing data in a non-volatile manner; and an UART RS232 (Universal Asynchronous Receiver Transmitter) for interfacing the control system with an external computer 24 for remote monitoring via an RS-232 interface.

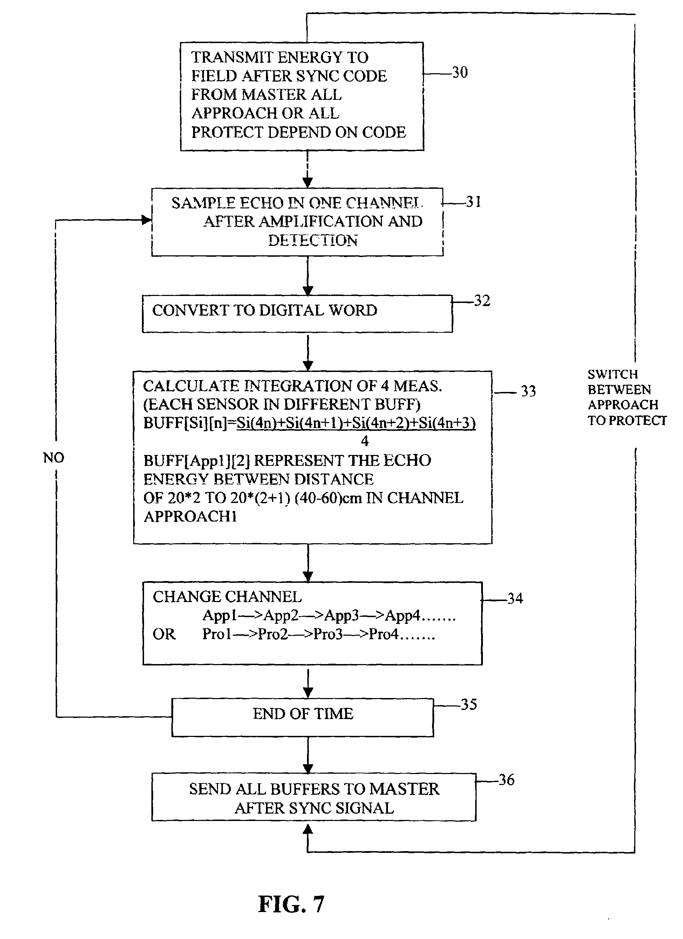

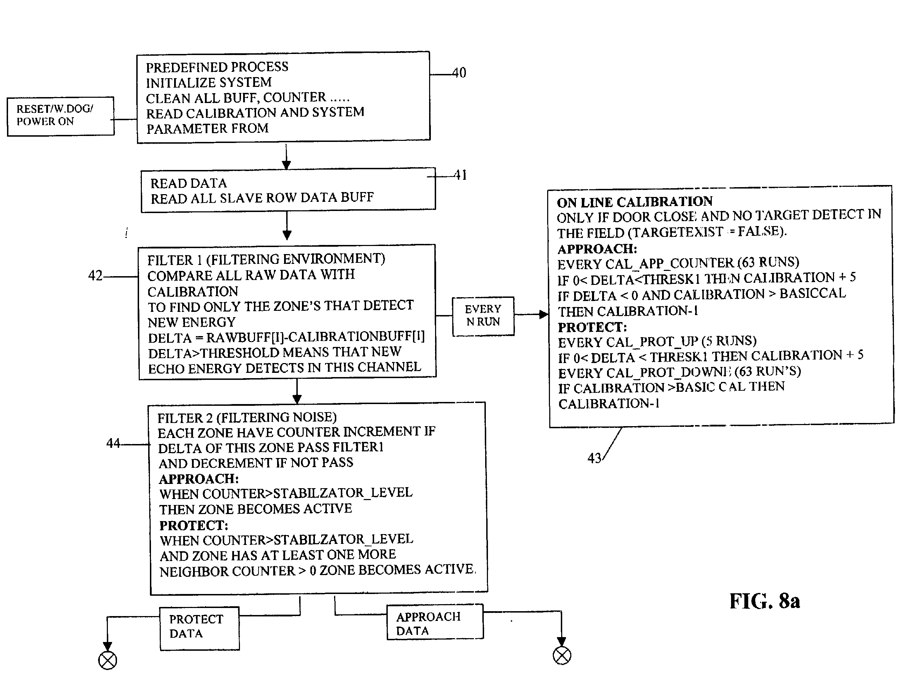

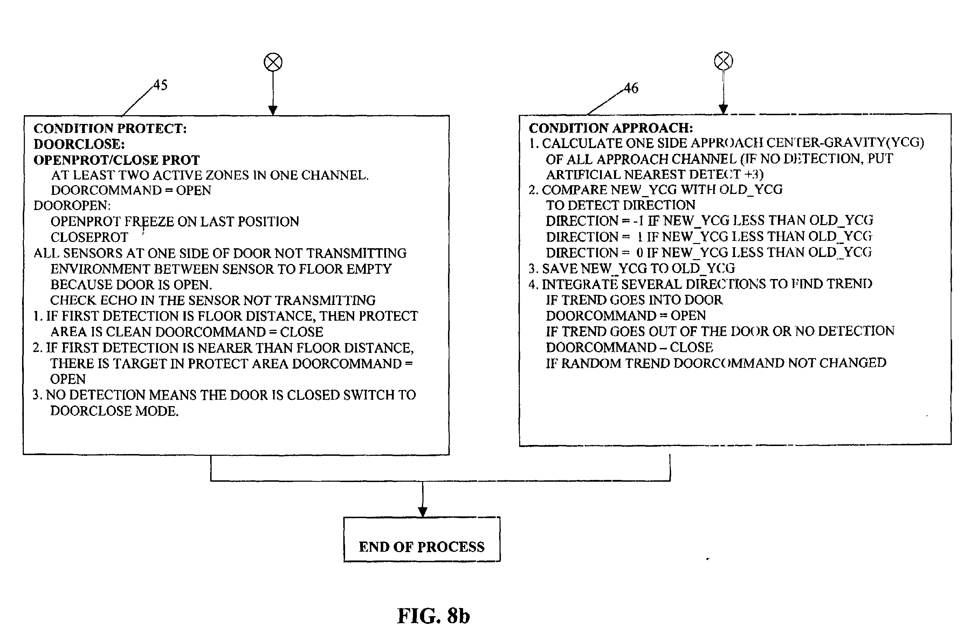

The operation of each of the sensor head control units 12, 14, is illustrated by the flow chart in Fig. 7; and the operation of the main control unit 16 is illustrated by the flow chart of Figs. 8a and 8b.

As one example, each of the sensor head control units 12, 14, may be microcontroller PIC16c73 by Microchip; and the main control unit 16 may be microcontroller PIC17cxx by Microchip.

### OPERATION

As described earlier, the illustrated system is of a modular construction including the appropriate number of sensor heads SH, and processing circuitry therefor, corresponding to the size of the door passageway to be monitored. In the example illustrated, there are four sensor heads on each side of the passageway. Each of the eight sensor heads SH₁- SH₈ includes an ultrasonic transceiver for monitoring the approach area (A₁, A₂, Fig. 1) and two ultrasonic transceivers for monitoring the two protect areas, namely the opening-door protect areas ODPL, ODPR, laterally of the sliding door panels SDP₁, SDP₂, and the closing-door protect areas CDP₁, CDP₂ between the two sliding door panels.

Each such transceiver includes a transmitter, a receiver, an amplifier and an analog-to-digital converter for detecting objects within the respective area, by their echoes, and for outputting measurement data representing the locations of the respective objects. These transceivers, for example, may be piezoelectrical devices operating at an ultrasonic frequency of 40 kHz.

The flow chart of Fig. 7 illustrates the operation of each of the two sensor head control units 12, 14, serving the two groups of sensor heads SH₁- SH₄ and SH₅ - SH₈ on opposite sides of the sliding door panels SDP₁, SDP₂. Thus, as shown in Fig. 7, each transceiver transmits a pulse (block 30), receives its echo (block 31), and converts the energy level of the received echo to digital form (block 32). The processor then processes the digital form of the received energy according to the operations set forth in block 33.

The foregoing operations are performed sequentially with respect to the data received by each of the four approach sensors Sa and then by the four protect sensors Sp (block 34). At the end of the sampling time (block 35), all the data accumulated in their respective buffers is sent to the main control unit 16 (block 36).

As shown by the flow chart of Fig. 8a, the main control unit 16 performs a predefined process in which it initializes the systems, cleans all the buffers, counters, etc., and reads the calibration and system parameters from the non-volatile memory 20. These calibration and system parameters are obtained during a short Study Procedure after installation of the system, in which the transceivers are operated, and the echo data accumulated for about 30 seconds while the door is forced to close and open upon itself. This data is stored and is used as the "data base" for comparison with the operational data obtained during the normal operation of the system.

Thus, during the normal operation of the system, the data received from the eight sensor heads SH₁- SH₈ via their control units 12, 14, is read (block 41), and is compared with the previously-recorded data obtained during the Study Procedure (block 40). The latter data serves as threshold values in order to filter out the object-derived echo signals from the environmental noise signals produced by the door, wall, floor, etc. (block 42). Preferably, dynamic thresholding is used in which the threshold values are dynamically recalibrated every Nth (e.g., 10^{th}) run (block 43).

The main control unit 16 then performs a second filtering operation (block 44) by averaging a predetermined number of signals (e.g., 10), with respect to the approach sensors Sa and the protect sensors Sp, in order to further reduce the noise (since noise tends to be random), and also to increase the signal strength.

The so-filtered data is then used to control the sliding door panels SDP₁, SDP₂ in the manner illustrated by blocks 45 and 46 in Fig. 8b, as follows:

Block 45 illustrates the operations performed on the data sensed by the protect sensors Sp which, as described earlier, are used for sensing the presence of an object in either of the opening-door protect areas ODPL, ODPR when a closed door is to be opened, or in the closing-door protect areas CBD1, CBD2 when an open door is to be closed. As shown by block 45 the sensors on one side of the door are used for transmission, and those on the other side for reception. If the first detection is the floor distance, this means that there is no obstacle in the respective area, and therefore the door may be closed or opened, according to the command. On the other hand, if an echo is detected at a shorter distance than the floor distance, this indicates there is an object in the protected area, and the door will be controlled accordingly.

Block 46 (Fig 8b) sets forth the basic operations performed by processing the data received by the approach sensors for each object detected by the approach sensors Sa₁-Sa₈ in the eight sensor heads SH₁ - SH₈, all the cells for a detected object are identified. Thus, a large physical object will be detected in a large number of contiguous (bordering) cells in the approach area A₁, A₂ as illustrated in Figs. 1 and 2, whereas a small object will be detected in only a single cell, or a relatively few cells.

The main control unit then determines the center of gravity of all the cells in which an object is detected and continuously monitors the movement of that center of gravity to determine whether it moves within a predetermined distance from and towards the doors, or at a predetermined velocity towards the doors, while the doors are closed. Block 46 in Fig 8b more particularly illustrates how the approach area is monitored by the approach sensors, and the center-of-gravity of the cells of the detected objects is used for controlling the opening of the doors. The doors are automatically closed at a predetermined time interval after opening, unless an object is detected in the closing-door protect regions CPD1, CPD2.

The foregoing system provides a number of important advantages. Thus, by determining and monitoring the movements of the center of gravity of the cells in the approach area in which an object was detected, the system is considerably simplified since it operates on the basis of analysing a trend rather than analysing each received signal. Thus, the system does not have to distinguish between the many different types of objects in the approach area, and also avoids the need to discriminate between different sensors, e.g., by frequency or time discrimination. Further, the system can distinguish between cross-traffic, i.e., traffic moving parallel to the closed doors and therefore not to open them, from approaching traffic moving towards the doors which is to automatically open the doors. In addition, one set of sensors may be used as transmitters on one side of the door, when the door is open, and the other set of transmitters may be used as receivers, which better identifies objects present in or moving through the door passageway. Finally, the modular construction permits the system to be easily tailored in size according to the requirements for any particular application.

## Claims

1. A method of automatically controlling the opening and closing of a sliding door (SDP₁, SDP₂) movable over a floor, and a drive for driving said door to its open and closed positions, a predetermined approach area (A1, A2) being located in front of said door, **characterised by**
ultrasonically monitoring the predetermined approach area by:
(i) dividing the predetermined approach area into a plurality of strips (VC1-VC4),
(ii) dividing each strip into a plurality of cells, to thereby define a matrix of cells;
(iii) detecting the presence of an object in any of said matrix of cells;
(iv) detecting the center of gravity of all the cells in which an object is detected;
(v) monitoring the movement of said detected center of gravity with respect to the door (SDP₁, SDP₂); and
(vi) controlling said drive to open said door when said detected center of gravity is determined to be moving towards, and at a predetermined speed towards or within a predetermined distance from, said sliding door when in its closed position.

2. The method according to Claim 1, wherein said monitoring is performed by a first group of ultrasonic transceivers (Sa) spaced along said door (SDP₁, SDP₂) and directed to an acute angle towards the floor.

3. The method according to Claim 2, wherein said monitoring is further performed by a second group of ultrasonic transceivers (Sp) spaced along said door (SDP₁, SDP₂) and directed substantially perpendicularly towards the floor.

4. The method according to Claim 3, wherein each of said first group of ultrasonic transceivers (Sa) is mounted in a transceiver head (SH) which also includes at least one of said second group of ultrasonic transceivers (Sp).

5. The method according to Claim 4, wherein each of said transceiver heads (SH) includes one of said first group of ultrasonic transceivers (Sa), and a pair of said second group of ultrasonic transceivers (Sp).

6. The method according to any of Claims 1-6, wherein said method further comprises:
ultrasonically monitoring a predetermined opening-door protect area (ODPL, ODPR) extending laterally in the plane in which the door (SDP₁, SDP₂) can slide outwards from a first end of the door in the opening direction of the door when in its closed position and a predetermined closing-door protect area (CDP₁, CDP₂) extending laterally in the plane in which the door can slide inwards from a second end of the door in the closing direction of the door when in its closed position, for the presence of an object in said opening-door and closing-door protect areas;
and controlling said drive also in response to said latter monitoring operations.

7. Apparatus for automatically controlling the opening and closing of a sliding door (SDP₁, SDP₂) having at least one sliding door panel movable over a floor, said door having a predetermined approach area (A1, A2) located in front of the door, a first predetermined lateral area extending laterally in the plane in which the door can slide outwards from a first end of the door in the opening direction of the door when in its closed position, and a second predetermined lateral area extending laterally in the plane in which the door can slide inwards from a second end of the door in the closing direction of the door when in its opened position; comprising:
a drive for driving said sliding door to its open and closed positions;
**characterised by**
an ultrasonic monitoring system for ultrasonically monitoring the predetermined approach area (A1, A2) by:
(i) dividing the predetermined approach area into a plurality of strips (VC1-VC4);
(ii) dividing each strip into a plurality of cells, to thereby define a matrix of cells;
(iii) detecting the presence of an object in any of said matrix of cells;
(iv) detecting the center of gravity of all the cells in which an object is detected;
(v) monitoring the movement of said detected center of gravity with respect to the door (SDP₁, SDP₂); and
(vi) controlling said drive to open said door (SDP₁, SDP₂) when said detected center of gravity is determined to be moving towards, and at a predetermined speed towards or within a predetermined distance from, said sliding door when in its closed position.

8. The apparatus according to Claim 7, wherein said monitoring system monitors said predetermined approach area by:
said control system controlling said drive to open said sliding door when said detected center of gravity is determined to be moving towards, and at a predetermined speed towards or within a predetermined distance from, said closed sliding door panels.

9. The apparatus according to Claim 8, wherein said system is a modular system comprising, for each strip, a transducer head (SH) which includes at least one of a first group of ultrasonic transceivers (Sa) and at least one of a second group of ultrasonic transceivers (Sh).

## Patentansprüche

1. Verfahren zur automatischen Steuerung des Öffnens und Schließens einer Schiebetür (SDP₁, SDP₂), die über einen Boden beweglich ist, und eines Antriebs zum Antreiben der Tür in ihre geöffnete und geschlossene Position, wobei sich ein vorbestimmter Näherungsbereich (A1, A2) vor der Tür befindet, **gekennzeichnet durch**
Ultraschallüberwachung des vorbestimmten Näherungsbereichs **durch**:
(i) Teilen des vorbestimmten Näherungsbereichs in mehrere Streifen (VC1-Vc4);
(ii) Teilen jedes Streifens in mehrere Zellen, um **dadurch** eine Matrix von Zellen zu definieren;
(iii) Erfassen des Vorhandenseins eines Objekts in irgendeiner der Matrix von Zellen;
(iv) Erfassen des Schwerpunkts aller der Zellen, in denen ein Objekt erfasst wurde;
(v) Überwachen der Bewegung des erfassten Schwerpunkts bezüglich der Tür (SDP₁, SDP₂); und
(vi) Steuern des Antriebs zum Öffnen der Tür, wenn bestimmt wird, dass sich der erfasste Schwerpunkt in Richtung und mit einer vorbestimmten Geschwindigkeit zu der Schiebetür oder innerhalb eines vorbestimmten Abstands davon bewegt, wenn sie sich in ihrer geschlossenen Position befindet.

2. Verfahren nach Anspruch 1, wobei das Überwachen durch eine erste Gruppe von Ultraschall-Transceivern (Sa) durchgeführt wird, die entlang der Tür (SDP₁, SDP₂) beabstandet und in einem spitzen Winkel zu dem Boden ausgerichtet sind.

3. Verfahren nach Anspruch 2, wobei das Überwachen ferner durch eine zweite Gruppe von Ultraschall-Transceivern (Sp) durchgeführt wird, die entlang der Tür (SDP₁, SDP₂) beabstandet und im Wesentlichen senkrecht zum Boden ausgerichtet sind.

4. Verfahren nach Anspruch 3, wobei jeder der ersten Gruppe von Ultraschall-Transceivern (Sa) in einem Transceiver-Kopf (SH) angebracht ist, der des Weiteren mindestens einen der zweiten Gruppe von Ultraschall-Transceivern (Sp) enthält.

5. Verfahren nach Anspruch 4, wobei jeder der Transceiver-Köpfe (SH) einen der ersten Gruppe von Ultraschall-Transceivern (Sa) und ein Paar der zweiten Gruppe von Ultraschall-Transceivern (Sp) enthält.

6. Verfahren nach einem der Ansprüche 1 - 6, wobei das Verfahren weiterhin Folgendes umfasst:
Ultraschallüberwachung eines vorbestimmten Öffnungstürschutzbereichs (ODPL, ODPR), der sich lateral in der Ebene erstreckt, in der die Tür (SDP₁, SDP₂) von einem ersten Ende der Tür in Öffnungsrichtung der Tür nach außen gleiten kann, wenn sie sich in ihrer geschlossenen Position befindet, und eines vorbestimmten Schließtürschutzbereichs (CDP1, CDP2), der sich lateral in der Ebene erstreckt, in der die Tür von einem zweiten Ende der Tür in Schließrichtung der Tür nach innen gleiten kann, wenn sie sich in ihrer geöffneten Position befindet, auf das Vorhandensein eines Objekts in dem Öffnungstür- und Schließtürschutzbereich;
und Steuerung des Antriebs auch als Reaktion auf die letzteren Überwachungsvorgänge.

7. Vorrichtung zur automatischen Steuerung des Öffnens und Schließens einer Schiebetür (SDP₁, SDP₂) mit mindestens einem Schiebetürflügel, der über einen Boden beweglich ist, wobei die Tür einen vorbestimmten Näherungsbereich (A1, A2) aufweist, der sich vor der Tür befindet, wobei sich ein erster vorbestimmter lateraler Bereich lateral in der Ebene erstreckt, in der die Tür von einem ersten Ende der Tür in Öffnungsrichtung der Tür nach außen gleiten kann, wenn sie sich in ihrer geschlossenen Position befindet, und sich ein zweiter vorbestimmter lateraler Bereich lateral in der Ebene erstreckt, in der die Tür von einem zweiten Ende der Tür in der Schließrichtung der Tür nach innen gleiten kann, wenn sie sich in ihrer geöffneten Position befindet; umfassend:
einen Antrieb zum Antreiben der Schiebetür in ihre geöffnete und geschlossene Position;
**gekennzeichnet durch**
ein Ultraschallüberwachungssystem zur Ultraschallüberwachung des vorbestimmten Näherungsbereichs (A1, A2) **durch**:
(i) Teilen des vorbestimmten Näherungsbereichs in mehrere Streifen (VC1-Vc4);
(ii) Teilen jedes Streifens in mehrere Zellen, um **dadurch** eine Matrix von Zellen zu definieren;
(iii) Erfassen des Vorhandenseins eines Objekts in irgendeiner der Matrix von Zellen;
(iv) Erfassen des Schwerpunkts aller der Zellen, in denen ein Objekt erfasst wurde;
(v) Überwachen der Bewegung des erfassten Schwerpunkts bezüglich der Tür (SDP₁, SDP₂); und
(vi) Steuern des Antriebs zum Öffnen der Tür (SDP₁, SDP₂), wenn bestimmt wird, dass sich der erfasste Schwerpunkt in Richtung und mit einer vorbestimmten Geschwindigkeit zu der Schiebetür oder innerhalb eines vorbestimmten Abstands davon bewegt, wenn sie sich in ihrer geschlossenen Position befindet.

8. Vorrichtung nach Anspruch 7, wobei das Überwachungssystem den vorbestimmten Näherungsbereich **dadurch** überwacht, dass
das Steuersystem den Antrieb zum Öffnen der Schiebetür steuert, wenn bestimmt wird, dass sich der erfasste Schwerpunkt in Richtung und mit einer vorbestimmten Geschwindigkeit zu den geschlossenen Schiebetürflügeln oder innerhalb eines vorbestimmten Abstands davon bewegt.

9. Vorrichtung nach Anspruch 8, wobei es sich bei dem System um ein modulares System handelt, das für jeden Streifen einen Transceiver-Kopf (SH) umfasst, der mindestens einen einer ersten Gruppe von Ultraschall-Transceivern (Sa) und mindestens einen einer zweiten Gruppe von Ultraschall-Transceivern (Sh) umfasst.

## Revendications

1. Procédé de commande automatique de l'ouverture et de la fermeture d'une porte coulissante (SDP₁, SDP₂) qui peut se déplacer sur un sol et d'un mécanisme d'entraînement pour entraîner ladite porte jusqu'à ses positions ouverte et fermée, une zone d'approche prédéterminée (A1, A2) se trouvant devant ladite porte, **caractérisé par** la surveillance ultrasonique de la zone d'approche prédéterminée en :
(i) divisant la zone d'approche prédéterminée en une pluralité de bandes (VC1 - VC4) ;
(ii) divisant chaque bande en une pluralité de cellules pour définir ainsi une matrice de cellules ;
(iii) détectant la présence d'un objet dans une cellule quelconque de ladite matrice de cellules ;
(iv) détectant le centre de gravité de toutes les cellules dans lesquelles un objet est détecté ;
(v) surveillant le mouvement dudit centre de gravité détecté par rapport à la porte (SDP₁, SDP₂) ; et
(vi) commandant ledit mécanisme d'entraînement pour qu'il ouvre ladite porte lorsqu'il est déterminé que ledit centre de gravité détecté se déplace en direction de, et à une vitesse prédéterminée en direction ou à moins d'une distance prédéterminée de ladite porte coulissante lorsqu'elle se trouve dans sa position fermée.

2. Procédé selon la revendication 1, selon lequel ladite surveillance est réalisée par un premier groupe d'émetteurs/récepteurs ultrasoniques (Sa) espacés le long de ladite porte (SDP₁, SDP₂) et dirigés vers le sol en angle aigu.

3. Procédé selon la revendication 2, selon lequel ladite surveillance est en plus réalisée par un deuxième groupe d'émetteurs/récepteurs ultrasoniques (Sp) espacés le long de ladite porte (SDP₁, SDP₂) et dirigés pour l'essentiel perpendiculairement vers le sol.

4. Procédé selon la revendication 3, selon lequel chacun des émetteurs/récepteurs ultrasoniques (Sa) dudit premier groupe est monté dans une tête d'émetteur/récepteur (SH) qui inclut également au moins un des émetteurs/récepteurs ultrasoniques (Sp) dudit deuxième groupe.

5. Procédé selon la revendication 4, selon lequel chacune desdites têtes d'émetteur/récepteur (SH) inclut l'un des émetteurs/récepteurs ultrasoniques (Sa) dudit premier groupe et une paire des émetteurs/récepteurs ultrasoniques (Sp) dudit deuxième groupe.

6. Procédé selon l'une quelconque des revendications 1 à 6, selon lequel ledit procédé comprend en outre :
surveillance ultrasonique d'une zone protégée d'ouverture de porte prédéterminée (ODPL, ODPR) qui s'étend latéralement dans le plan dans lequel la porte (SDP₁, SDP₂) peut coulisser vers l'extérieur depuis une première extrémité de la porte dans le sens de l'ouverture de la porte lorsqu'elle se trouve dans sa position fermée et d'une zone protégée de fermeture de porte prédéterminée (CDP₁, CDP₂) qui s'étend latéralement dans le plan dans lequel la porte peut coulisser vers l'intérieur depuis une deuxième extrémité de la porte dans le sens de la fermeture de la porte lorsqu'elle se trouve dans sa position ouverte, en vue de détecter la présence d'un objet dans lesdites zones protégées d'ouverture de porte et de fermeture de porte ;
et commande dudit mécanisme d'entraînement également en réaction auxdites dernières opérations de surveillance.

7. Appareil de commande automatique de l'ouverture et de la fermeture d'une porte coulissante (SDP₁, SDP₂) comprenant au moins un panneau de porte coulissant qui peut se déplacer sur un sol, ladite porte ayant une zone d'approche prédéterminée (A1, A2) se trouvant devant la porte, une première zone latérale prédéterminée qui s'étend latéralement dans le plan dans lequel la porte peut coulisser vers l'extérieur depuis une première extrémité de la porte dans le sens de l'ouverture de la porte lorsqu'elle se trouve dans sa position fermée et une deuxième zone latérale prédéterminée qui s'étend latéralement dans le plan dans lequel la porte peut coulisser vers l'intérieur depuis une deuxième extrémité de la porte dans le sens de la fermeture de la porte lorsqu'elle se trouve dans sa position ouverte, comprenant :
un mécanisme d'entraînement pour entraîner ladite porte coulissante jusqu'à ses positions ouverte et fermée ;
**caractérisé par**
un système de surveillance ultrasonique pour réaliser la surveillance ultrasonique de la zone d'approche prédéterminée (A1, A2) en :
(i) divisant la zone d'approche prédéterminée en une pluralité de bandes (VC1 - VC4) ;
(ii) divisant chaque bande en une pluralité de cellules pour définir ainsi une matrice de cellules ;
(iii) détectant la présence d'un objet dans une cellule quelconque de ladite matrice de cellules ;
(iv) détectant le centre de gravité de toutes les cellules dans lesquelles un objet est détecté ;
(v) surveillant le mouvement dudit centre de gravité détecté par rapport à la porte (SDP₁, SDP₂) ; et
(vi) commandant ledit mécanisme d'entraînement pour qu'il ouvre ladite porte (SDP₁, SDP₂) lorsqu'il est déterminé que ledit centre de gravité détecté se déplace en direction de, et à une vitesse prédéterminée en direction ou à moins d'une distance prédéterminée de ladite porte coulissante lorsqu'elle se trouve dans sa position fermée.

8. Appareil selon la revendication 7, avec lequel ledit système de surveillance surveille ladite zone d'approche prédéterminée de la façon suivante :
ledit système de commande commande ledit mécanisme d'entraînement pour qu'il ouvre ladite porte coulissante lorsqu'il est déterminé que ledit centre de gravité détecté se déplace en direction de, et à une vitesse prédéterminée en direction ou à moins d'une distance prédéterminée desdits panneaux de porte coulissante fermés.

9. Appareil selon la revendication 8, avec lequel ledit système est un système modulaire incluant, pour chaque bande, une tête d'émetteur/récepteur (SH) qui inclut au moins un émetteur/récepteur ultrasonique (Sa) d'un premier groupe et au moins un émetteur/récepteur ultrasonique (Sh) d'un deuxième groupe.
